# EUROPEAN PATENT APPLICATION

(11) **EP 3 266 405 A1**
(43) Date of publication of application: **10.01.2018**
(21) Application number: 16709984.5
(22) Date of filing: 01.03.2016
(51) Int. Cl.: A61C 1/08

(54) **SURGICAL GUIDE FOR THE PLACEMENT OF DENTAL IMPLANTS, AND TOOL FOR MOUNTING AND REMOVING SAID GUIDE**

(30) Priority: 02.03.2015 ES 201530266
(71) Applicant: Phibo Dental Solutions, S.L., 08181 Sentmenat (Barcelona) (ES)
(72) Inventor: ALSINA FONT, Francesc, 08181 Sentmenat (Barcelona) (ES); LOPEZ PEREZ, Antonio, 08181 Sentmenat (Barcelona) (ES)
(74) Representative: Herrero & Asociados, S.L.
(86) International application number: PCT/ES2016/070134
(87) International publication number: WO 2016/139382

(57) **Abstract**

The surgical guide for the placement of dental implants of the invention is intended to guide the surgeon during the drilling of the bone bed of a patient, prior to the placement of an implant within the operation for the replacement of one or various dental pieces, basically comprising a handle (1) having a hole (2) in at least one of its ends and a drill reducer sleeve (3) which is joined to the handle (1) through said hole (2) and having a circular through hole (10) having a constant diameter to allow close-fitting passage of a drill (13) during the drilling operation, a first portion (7) connected to the hole (2) of the handle (1) and a second portion (8) capable of closely fitting by friction to the inner diameter of the guide hole (4) of a surgical template (5), and wherein, furthermore, a tool used for the assembly and disassembly of the drill reducer sleeve (3) in the handle (1) is described, made up of a stand (15) and a plunger (19).

## Description

### Object of the invention

The object of the present invention is a surgical guide for the placement of dental implants that is intended to guide the surgeon during the drilling of the bone bed of a patient, prior to placement of an implant within the replacement operation of one or more dental pieces.

More specifically, the surgical guide of the invention makes it possible to guide the drilling according to the prosthetic plan with increased precision and in a customized way for each patient.

Furthermore, the present invention also includes a specially designed tool for fast and convenient assembly and disassembly of said guide.

### Background of the invention

Currently, implantology techniques make it possible to replace dental roots by means of implants, to which in turn the corresponding prosthesis or artificial dental pieces are coupled in order to rehabilitate the mouth of the patient.

This currently widely extended technique is specifically applied when the patient needs to substitute or replace any dental piece.

Basically, the phases of dental implant rehabilitation are summarized as:
1. an initial surgery phase wherein implants, which serve to anchor the prostheses for the dental pieces needing replacement, are placed;
2. a second phase consisting of sample collection and measuring the mouth of the patient, which serves to produce the dental models or mouth replicas.
3. a third phase wherein, based on the model of the previous phase, the prosthesis, intended to replace the dental piece and which will be fixed to the implant described in the first phase, is made, and finally
4. placement of the prosthesis in the mouth.

The subsequent evolution of the implant and prosthesis assembly in the mouth of the patient and its chewing function therefore depend greatly on each of these stages and, although the manufacturing stage of the prosthesis is essential, measuring the mouth of the patient is also crucial because it must be as accurate as possible.

Currently, this sample collecting and measuring phase can be carried out in two ways:
- Manually, using the known transfer elements or "transfers" in which the patient is asked to bite a deformable material on which the positions and shapes of the dental pieces, gingiva and particularly said transfer elements coupled to the gingiva of the patient will be imprinted. These transfer elements will therefore be those that indicate or signal the position and placement of the implant on which the prosthesis will later be fixed; or
- By means of a digital scan of the mouth of the patient, a technique which, although it emerged recently, has experienced a great boom because with the right technology, detailed digital information about the patient's mouth can be obtained, i.e. not only about the geometry of the mouth itself but also any dental pieces and implants already in place. This information is then turned into a digital file with which, through the corresponding software, yields a digital model of the mouth of the patient that is subsequently used for the manufacturing of a physical model of the mouth, based on rapid prototyping technologies such as laser sintering, drilling, etc.

However, it is evident that these two ways of measuring will only prove effective if the implants have been previously correctly positioned over the mouth of the patient because, as mentioned earlier, these will be scanned or used as support for the said transfer elements.

In short, all the work carried out during the stages of manufacturing and placing the dental prosthesis is seriously compromised if this first stage of implant positioning is defective, giving rise to an error that could result in a poor fit or even the impossibility of placing a prosthesis due to implant unparallelism, bone reabsorption, vestibular inclination of implants and occlusion incidents.

Therefore, particular attention is paid to this first phase of implant placement in order to obtain the most accurate results possible, especially taking into account that this depends to a great extent on the skill and experience of the surgeon who will be drilling the bone bed where the implant will later be positioned. The position, orientation, angulation, and depth of drilling can be carried out manually by the surgeon or be guided by some existing system.

In the case of guided surgery, prior to said surgery, i.e. to the moment of drilling by the surgeon, a surgical template is manufactured which, based on the information obtained from the mouth of the patient, reproduces the part of the gingiva where the drilling will take place and which also contains one or more guide holes situated thereon, in order to guide the surgeon in the drilling of the bone bed.

This surgical template, customized for each patient, is generally designed and produced digitally in plastic through a sintering process or similar, wherein the aforementioned guide holes which are found in upward raised areas as a kind of promontory, reaching a sufficient height to serve as a guide, which internally comprise, as a coating, a cylindrical portion made, in most cases, of metallic material.

Currently existing surgical templates can be divided into three large groups: templates for the start of drilling which give an indication of where the implant should be placed, templates which allow the complete sequence of drilling, forcing the manual placement of the implant, and a final group which allows the complete sequence of drilling and the guided placement of the implant, which would be where the guide of the patent is found.

On the other hand, said surgical template is complemented by a set of drill reducers which, coupled to the guide holes of the template, enable said holes to be adapted to the diameter of the different drills, so that they adapt as much as possible to these, eliminating looseness and, therefore, carrying out better guiding, which results in more accurate drilling, thus placing the implant as closely as possible to its optimum position.

These drill reducers consist of sleeves, which are also metallic, the outer shape matching the inner face of the corresponding guide hole of the surgical template - generally cylindrical -, and the interior shape being cylindrical, which are also complemented, as described in EP2397103 and EP2060240, by a handle or grip, which gives them the shape of "spoons", being the name under which they are commonly known.

This handle, which is either inseparably joined to the drill reducer or constitutes with the drill a single piece, allows or facilitates gripping by the surgeon, who may hold them with one hand while holding the drill with the other.

Generally these surgical guides are marketed as a kit, wherein, in addition to a set of drills having the necessary diameters, corresponding drill reducers are provided, with or without the aforementioned shape of spoons. Thus the surgeon will have all the applicable reducers for each of the drills at his disposal.

However, although said drill reducers with handle or spoons greatly facilitate the task of the surgeon as set forth above, they present a number of problems or disadvantages such as those mentioned herebelow.
- First, because of its metallic nature, the looseness or tolerance that the inner diameter must have, which serves as the guide per se for the drill, should be sufficient to avoid high friction. Being reusable items, less deterioration due to friction is sought, entailing a prolonged duration thereof, i.e. this tolerance is increased with the use of the guide to the detriment of surgical accuracy.
- This looseness also occurs on the outer diameter which is coupled to the hole of the guide of the surgical template, causing additional deviation from the desired accuracy.
- Second, the size of said spoons is a handicap, because as they must be incorporated into a case or kit such as the one mentioned previously, they should not be too large, so that the assembly is not too large and/or bulky and to ensure that all the necessary spoons are included, i.e. one for each of the different existing diameters of the drill.
   This reduced size, however, results in poorer handling by the surgeon, especially when replacing dental pieces located in the back portion of the jaw, i.e. those situated well inside of the mouth.

Another document known in the state of the art is DE202013001415, which relates to a drill-reducing element guided by templates, which includes a spoon-style handle in one possible embodiment. However, said document is directed towards a guide element which has a master metal sleeve which inwardly engages with a guide or drilling sleeve, also metallic, which guides the drill during drilling, both being joined by a small bayonet connection.

The system described in said document, however, also has the disadvantage of the metallic nature of the drill reducer sleeve, which means having to work with certain amounts of looseness, to which in this case the required looseness between the reducer sleeve and the master must also be added, which will be added to the looseness that said master sleeve must have and the guide hole of the template or orthodontal splint placed on the mouth of the patient.

In addition, this system has the drawback that the bayonet connection causes retention due to the interaction with the different fluids present during surgery, such as blood, saliva, serum, etc.

### Description of the invention

The surgical guide for the placement of dental implants of the present invention overcomes the aforementioned problems of the state of the art and is also an easy to handle, versatile tool, adaptable to each user, which achieves a high degree of accuracy and furthermore takes up very little space.

To this end, the surgical guide for the placement of dental implants of the invention basically comprises:
A handle which serves for the surgeon to hold and which, at least at one of its ends, has a hole for a drill reducer sleeve, of single use and disposable, made of biocompatible plastic material, wherein the two are joined together though non-permanent retaining means allowing assembly and disassembly, for which a specially designed tool is used that is described further on.

As shall be seen below, these features overcome the aforementioned problems of the state of the art.

Specifically, as far as precision is concerned, the fact that the drill reducer sleeve is made of a plastic material has a twofold effect on reducing tolerances or looseness.
a) On the one hand, a reduction of looseness is achieved since the outer diameter of the reducer sleeve can be closely fit by means of friction to the inner diameter of the guide hole of the surgical template which adapts to the portion of gingiva wherein the drilling will take place.
   This reduction in looseness logically provides increased precision when drilling the bone bed.
b) On the other hand, a reduction of looseness in the inner diameter of the reducer sleeve is achieved because said reducer is made of plastic, and allows friction with the drill while drilling, thus enabling a closer fit and higher precision when guiding the drill.
c) Finally, the fact that the drill reducer is disposable is an obvious advantage for the patient, since it constitutes a health guarantee by avoiding possible infections.

Therefore, the present invention, overcoming the preconception of the state of the art based on avoiding drill reducer sleeves made of plastic materials, as a result of using this type of material, succeeds in significantly reducing looseness during the drilling phase, which clearly improves the positioning of the implant, facilitating positioning at a theoretical optimal point for which the surgical template is designed.

Moreover, as already mentioned, since the reducer sleeves are made of plastic, with a low cost that allows for a single use for each patient, entails the advantage that, coupled to a single metal handle, the surgeon can dispose of as many reducer sleeves as required by the drilling sequence, depending on the implant design for each patient.

The joint between the handle and the drill reducer sleeve is carried out by means of non-permanent retaining means which allow a removable connection between the handle and the reducer sleeve so that the surgeon can, at all times, couple the handle to the corresponding reducer sleeve, and also remove it once the drilling of the bone bed of the patient has been carried out for the placement of the implant. The assembly and disassembly of the reducer sleeve is carried out with the help of the tool, described further on, which was specifically designed for this purpose.

Furthermore, the reducer sleeves will have a varying inner diameter depending on the planned surgical sequence, but a fixed outer diameter so that the complementary retaining means provided in said sleeve are able to work with the hole in the handle.

The joint between the handle and the reducer sleeve provided by the mentioned retaining means ensure, on the one hand, a strong connection during the drilling operation and, on the other hand, a removable connection once the operation is over.

Furthermore, as has already been mentioned, for the assembly and disassembly of the reducer sleeve on the handle of the present invention it also describes a specifically designed tool, comprising the following two elements:
- A stand designed to support the handle of the surgical guide prior to the placement or removal of the reducer sleeve, and,
- A plunger with which the reducer sleeve of the guide handle can either be inserted or removed, once said handle is placed on the stand.

It follows from the above that the surgical guide of the invention is a versatile tool that is easy to use and safe for the patient, and that it overcomes the disadvantages of the aforementioned state of the art by adding the following advantages to those already mentioned:
- It improves the accuracy of implant placement, ensuring the success of intended prosthetic planning;
- The drill guide is simplified and becomes modular and versatile;
- It allows the elements which influence final accuracy to be supplied without increasing costs; and
- It offers a health guarantee for the patient since the drill reducer sleeves are not reusable.
- Finally, as the reducer sleeves can be removed from the handle, this facilitates their cleaning, disinfection and sterilization.

### Description of the drawings

As a complement to the description provided herein, and for the purpose of helping to make the characteristics of the invention more readily understandable, in accordance with a preferred practical embodiment thereof, said description is accompanied by a set of figures constituting an integral part of the same, which by way of illustration and not limitation represent the following:
- Figure 1. - Shows a perspective view of a possible practical embodiment of the surgical guide of the invention.
- Figure 2a. - Shows a perspective view of a possible drill reducer sleeve used in the drill guide shown in Figure 1.
- Figure 2b. - Shows a perspective view of another possible drill reducer sleeve.
- Figure 3. - Shows an elevation view of the end of the guide shown in Figure 1 revealing the sleeve, wherein said sleeve is in cross section, and a close-up of the joint of said sleeve with the handle.
- Figure 4. - Shows a perspective view of the joining of several surgical guides as shown in Figure 1, wherein a close-up of the joining element of said drill guides can also be seen.
- Figure 5. - Shows a perspective view of another possible practical embodiment of the surgical guide of the invention.
- Figure 6. - Shows a perspective view of the joining of several drill guides as shown in Figure 5.
- Figure 7. - Shows a perspective view and a partial cross section of the surgical guide of the invention in its operating position on a surgical template in place on the patient.
- Figure 8. - Shows a perspective view similar to that seen in Figure 7, wherein a drill or drilling bore can also be seen.
- Figure 9. - Shows a perspective view of the two elements which make up the tool used for the assembly and disassembly of the reducer sleeve in the handle of the guide of the present invention.
- Figure 10. - Shows a perspective view of the surgical guide and the tool before being coupled together.
- Figure 11. - Shows a perspective view of the surgical guide and the tool once coupled together.
- Figure 12. - Finally, shows a rear elevation view of the previous figure cut away in order to observe the arrangement of all the elements once they have been assembled.

### Preferred embodiment of the invention

As shown in the figures, the surgical guide for the placement of dental implants of the invention basically comprises:
A handle (1), preferably metallic, although any material that can be sterilized would also be valid, which serves as a handle for the surgeon, with at least one hole (2) at one of its ends so that it can be joined to a disposable and not reusable drill reducer sleeve (3), preferably made of plastic material, wherein both elements are joined through non-permanent retaining means.

This plastic material should have a number of technical features which enable it to withstand the high friction produced by the drill (13), as well as having good chemical resistance, good operating temperature, structural and dimensional stability, good sliding properties and, in general, it should provide an adequate response to the high mechanical stress required, and be biocompatible and sterilizable.

This requires that the drill reducer sleeve (3) of the invention be preferably made of a thermoplastic, such as, for example, a PEEK type biocompatible polyetherketone.

As stated previously, when using a drill reducer sleeve (3) made of plastic material, a reduction of looseness is achieved since the outer diameter of said sleeve (3) can fit by means of friction to the inner diameter of the guide hole (4) of the surgical template (5) which adapts to the portion of gingiva (6) of the patient, wherein the drilling will take place.

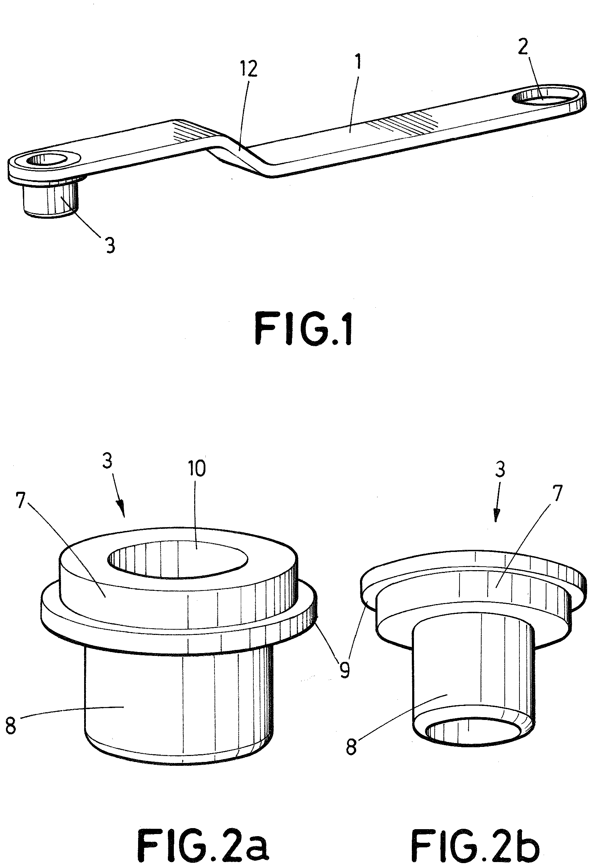

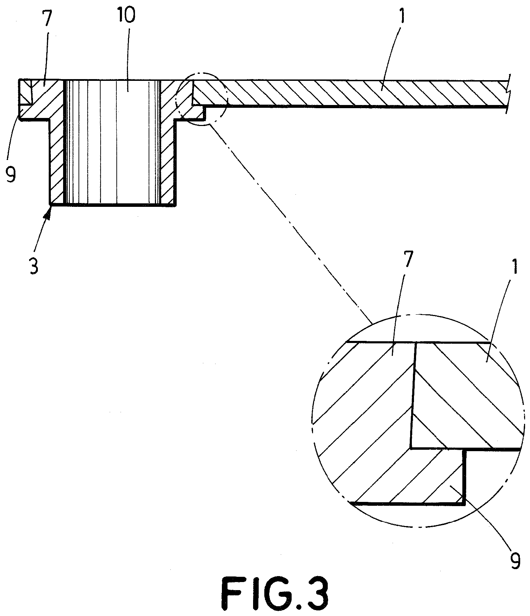

As seen in the embodiment shown in the figures, particularly Figures 2a and 2b, the reducer sleeve (3) is comprised of a cylindrical part having a circular through hole (10) having a constant diameter which allows the close-fitting passage of the drill (13) during the drilling operation, and which also has externally, according to a possible embodiment, a cylindrical configuration, although it is possible that in another embodiment it may have a polygonal section comprised of:
- A first portion (7) intended for insertion into the hole (2) of the handle (1) of the drill guide and, therefore, to provide the fitting by friction to the inner diameter of the hole (2) of the handle (1).
   More specifically, as shown in detail in Figure 3, the retaining means between the hole (2) and the reducer sleeve (3) which enable joining by friction, are formed by an inverted cone in the first portion (7), such that the area of greater diameter is higher than the area of smaller diameter, said cone ensuring the retention of the part.
- A second portion (8) having a constant diameter such that the fitting is also provided by friction to the inner diameter of the guide hole (4) of the surgical template (5) and having variable height depending on the height of said guide hole (4).
- A flange or perimeter rim (9) which serves as a stop for fitting the reducer sleeve (3) to the hole (2) of the handle (1).
   According to a first embodiment of the drill reducer sleeve (3) shown in figure 2a, the flange (9) is located between the first portion (7) and the second portion (8), such that it will serve as a stop when the reducer sleeve (3) is inserted into the hole (2) of the drill guide from the bottom. Specifically, this assembly can be seen in Figures 3 to 8.
   According to a second embodiment of the reducer sleeve (3) shown in Figure 2b, the flange (9) is located above the first portion (7), the bottom portion of the sleeve remaining in the second portion (8), i.e. it is the first portion (7) which is located between the flange (9), which limits it from above, and the second portion (8), limits it from below. In this case, therefore, said flange (9) will serve as a stop when inserting the reducer sleeve (3) into the hole (2) of the drill guide from above.

Furthermore, as shown in the figures, the handle (1) can have a second hole (2) located at the other end, to allow the surgeon to insert a second reducer sleeve (3) to provide, in the same "spoon", two different drill guides which he can alternate at his own discretion and as per the surgery requirements.

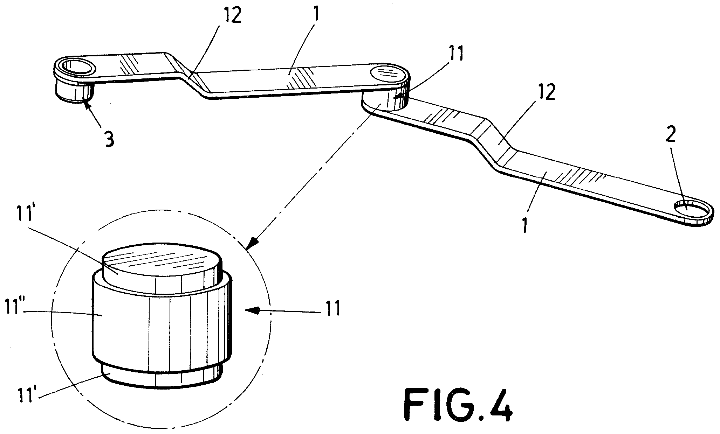

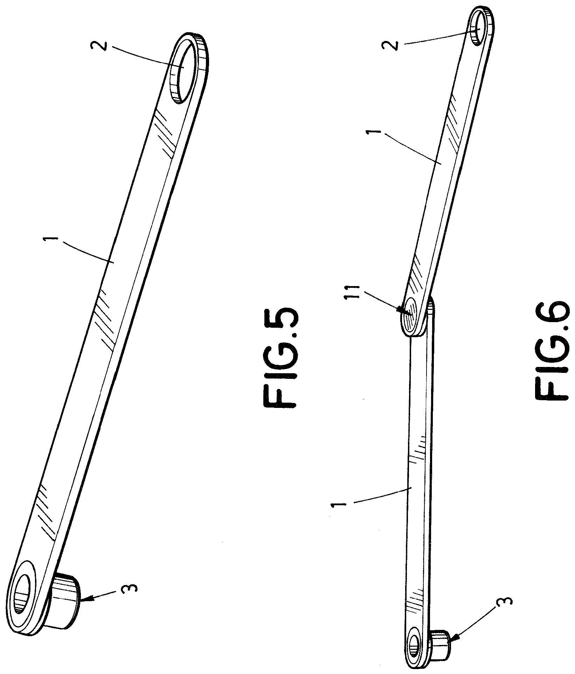

On the other hand, as can be seen in Figures 4 and 6, any of the holes (2) can be used to obtain longer surgical guides by simply associating or joining together several handles (1) by means of a connecting element (11) in order to facilitate drilling for the surgeon in those cases where said drilling lies further away than usual, or when there is little space for the hand which is holding the handle (1).

This connecting element (11), which can be seen especially in Figure 4, will have a shape such that it allows relative rotation between the two handles (1). For example, as can be seen in said figure, it can have a cylindrical shape with two lowered ends (11') intended to be lodged inside the holes (2) of the handles (1) to be connected, its central portion (11"), which has a greater diameter than the lowered ends (11'), thus constituting corresponding stops which will support the respective handles (1) and allow them to rotate.

Said handles (1), can also be completely flat as shown in Figures 5 or 6 or they can have one of more ledges (12) as can be seen in Figures 1, 4, 7 and 8, so that in the latter case, the ends of said handles (1) will be positioned on parallel but not coinciding planes, one above the other. This will allow the surgeon to bridge a difference in level, either by using a single handle (1), i.e. a single surgical guide, or two connected guides as shown in Figure 4, where the difference in level bridged is greater.

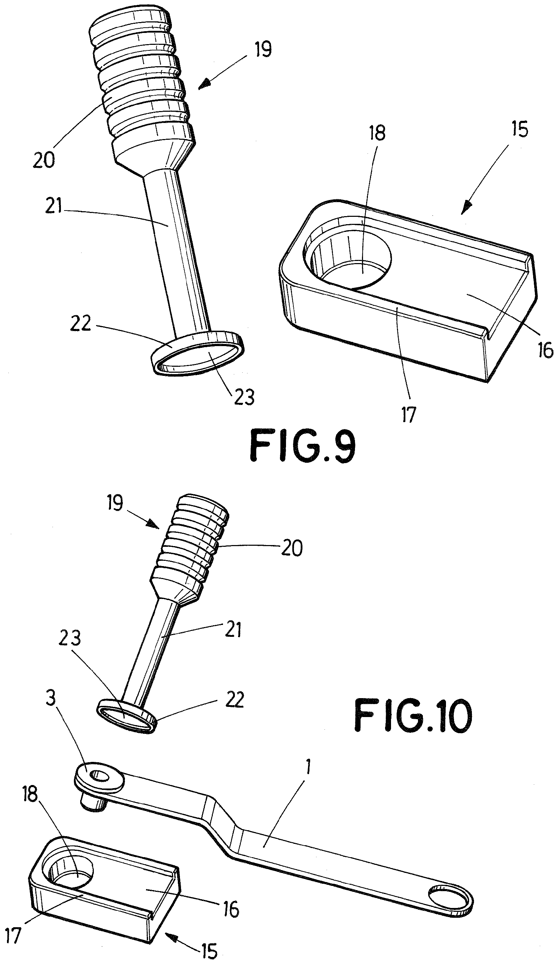

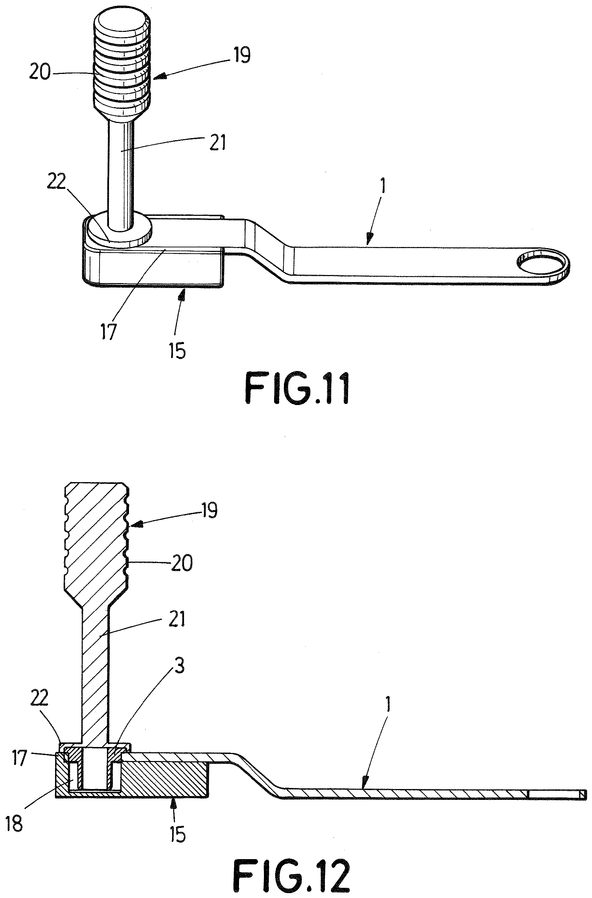

On the other hand, in Figures 9 to 12 a possible practical embodiment of the tool used for the assembly and disassembly of the reducer sleeve (3) in the handle (1) is seen when said sleeve (3) has the configuration shown in Figure 2b of the present invention, which comprises two elements:
- A stand (15) to support the handle (1) of the surgical guide prior to the assembly or disassembly of the reducer sleeve (3), wherein said stand (15) comprises:
   ∘ A support surface (16) on which the handle (1) of the surgical guide rests;
   ∘ A rim (17) limiting the support surface (16) such that the handle (1) fits into it, thus limiting its movement during assembly and disassembly;
   ∘ A cavity (18) corresponding to the area where the hole (2) of the handle (1) is located and whose depth is such as to allow the housing of the second portion of the reducer sleeve (3), wherein furthermore the upper edge of said cavity is such that it allows the flange (9) to be supported.

A plunger (19) comprising a handgrip (20) from which a rod (21) extends, topped by a pushing and extracting platform (22) at its other end, which has a circular recess (23) in which to attach the flange (9) whether for the assembly or the disassembly of the reducer sleeve (3).

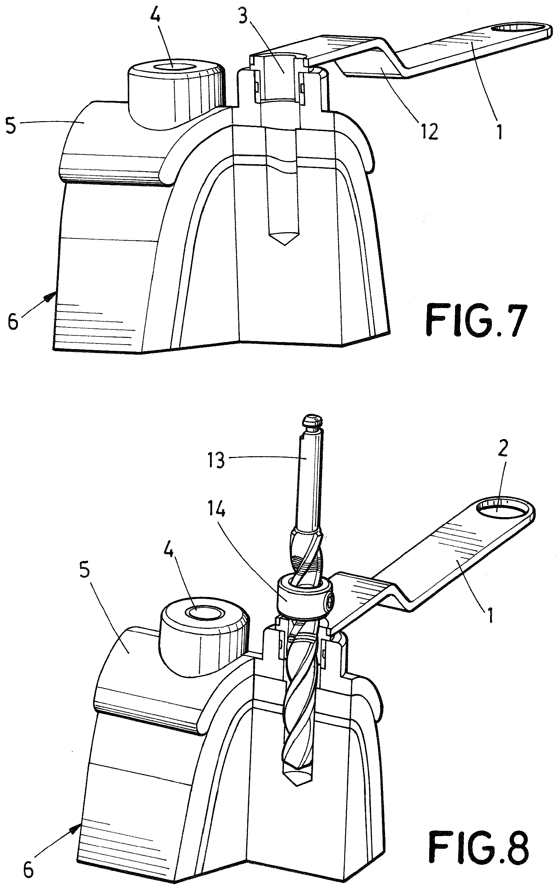

Finally, and as can be seen in Figure 8, the surgical guide of the invention can be used with other elements such as drill stops (14), which limit the length of entry of the drill into the bone bed of the patient, i.e. the drilling depth.

## Claims

1. A surgical guide for the placement of dental implants, which comprises:
- a handle (1) having a hole (2) in at least one of its ends, and
- a drill reducer sleeve (3) joined to the handle through said hole (2), **characterized in that** it comprises non-permanent retaining means for the joining between the handle (1) and the drill reducer sleeve (3), and **in that** said drill reducer sleeve (3) is disposable and made of a biocompatible and sterilizable plastic material.

2. The surgical guide for the placement of dental implants according to claim 1, **characterized in that** the reducer sleeve (3) comprises:
- a circular through hole (10) having a constant diameter to allow the close-fitting passage of a drill (13) during the drilling operation;
- a first portion (7) joined to the hole (2) of the handle (1) through non-permanent retaining means; and
- a second portion (8) which is able to fit to the inner diameter of the guide hole (4) of a surgical template (5).

3. The surgical guide for the placement of dental implants according to claims 1 or 2, **characterized in that** the non-permanent retaining means between the sleeve (3) and the hole (2) of the handle (1) fit by means of friction.

4. The surgical guide for the placement of dental implants according to any of the preceding claims 2 or 3, **characterized in that** the reducer sleeve (3) has a flange (9) serving as a stop for fitting the reducer sleeve (3) with the hole (2) of the handle (1).

5. The surgical guide for the placement of dental implants according to claim 4, **characterized in that** the flange (9) is located between the first portion (7) and the second portion (8).

6. The surgical guide for the placement of dental implants according to claim 4, **characterized in that** the first portion (7) is located between the flange (9) and the second portion (8).

7. The surgical guide for the placement of dental implants according to any of the preceding claims 2 to 6, **characterized in that** the first portion (7) of the reducer sleeve (3) has an inverted cone shape to fit by friction.

8. The surgical guide for the placement of dental implants according to any of the preceding claims, **characterized in that** the handle (1) has a second hole (2) located on its other end.

9. The surgical guide for the placement of dental implants according to claim 5, **characterized in that** comprises a connecting element (11) capable of being housed simultaneously in two holes (2) for joining together several handles (1).

10. The surgical guide for the placement of dental implants according to claim 6, **characterized in that** the connecting element (11) is of a shape such that is allows relative rotation between the two handles (1).

11. The surgical guide for the placement of dental implants according to any of the preceding claims, **characterized in that** the ends of the handle (1) will be located on parallel but not coinciding planes.

12. The surgical guide for the placement of dental implants according to any of the preceding claims, **characterized in that** the drill reducer sleeve (3) is made of biocompatible plastic material.

13. A tool for the assembly and disassembly of a surgical guide as described in claims 1 to 4 and 6 to 12, **characterized in that** it comprises:
- A stand (15) designed to support the handle (1) of the surgical guide prior to the placement or removal of the reducer sleeve (3); and
- A plunger (19) with which the reducer sleeve (3) can either be inserted into or removed from the hole (2) of the handle (1), once said handle (1) of drill guide is placed on the stand (15).

14. The tool for the assembly and disassembly of a surgical guide according to claim 13, **characterized in that** the support (15) comprises:
∘ A support surface (16) on which the handle (1) of the surgical guide rests;
∘ A rim (17) limiting the support surface (16) such that the handle (1) fits into it thus limiting its movement during assembly and disassembly;
∘ A cavity (18) corresponding to the area where the hole (2) of the handle (1) is located and whose depth is such as to allow the housing of the second portion of the reducer sleeve (3), wherein furthermore the upper edge of said cavity is such that it allows the flange (9) to be supported.

15. The tool for the assembly and disassembly of a surgical guide according to claim 13, **characterized in that** the plunger (19) comprises a handgrip (20) from which a rod (21) extends, topped by a pushing and extracting platform (22) at its other end, wherein said pushing and extracting platform (22) has a circular recess (23) to which the flange (9) of the reducer sleeve (3) may be attached for assembly or disassembly thereof.
